# EUROPÄISCHE PATENTSCHRIFT

(11) **EP 4 249 100 B1**
(45) Veröffentlichungstag und Bekanntmachung des Hinweises auf die Patenterteilung: **05.06.2024**
(21) Anmeldenummer: 22163802.6
(22) Anmeldetag: 23.03.2022
(51) Int. Cl.: B01D 33/044, B01D 33/048, B01D 33/72, B01D 33/66, B01D 29/09, B01D 29/84, B01D 29/90

(54) **DRUCKBANDFILTER**
PRESSURE BELT FILTER
FILTRE À BANDE SOUS PRESSION

(43) Veröffentlichungstag der Anmeldung: 27.09.2023
(73) Patentinhaber: Dipl.-Ing. Erich Fetzer GmbH & Co. KG, 72770 Reutlingen-Gönningen (DE)
(72) Erfinder: Wagner, Michael, 72770 Reutlingen (DE)
(74) Vertreter: Witte, Weller & Partner Patentanwälte mbB

(56) Entgegenhaltungen:
- EP-A2- 0 331 020
- EP-A2- 0 459 972
- DE-A1-102004 062 415
- US-A- 4 826 596

## Beschreibung

Die Erfindung betrifft ein Druckbandfilter.

Die Patentanmeldung EP 0 331 020 A2 offenbart ein Bandfilter mit zwei Kreisscheiben, die mit axialem Abstand voneinander gleichachsig angeordnet und um eine gemeinsame Drehachse drehbar an Innenseiten von Seitenwänden eines Filtergehäuses gelagert sind. Ein Filterband ist halbkreisförmig unten um einen Umfang der beiden Kreisscheiben herum geführt und bildet zusammen mit den beiden Kreisscheiben eine Filtermulde, in die eine zu filtrierende Flüssigkeit eingeleitet wird, die durch Schwerkraft durch das Filterband strömt und dabei gefiltert wird. Dabei setzen sich aus der Flüssigkeit gefilterte Feststoffe als Filterkuchen auf dem Filterband ab, der durch einen Förderantrieb des Filterbandes, bei dem sich die beiden Kreisscheiben mitdrehen, zusammen mit dem Filterband aus dem Bandfilter gefördert werden kann.

Aufgabe der Erfindung ist eine Weiterbildung eines derartigen Bandfilters zu einem Druckbandfilter, womit gemeint ist, dass eine Durchströmung eines Filterbandes durch eine Druckdifferenz auf beiden Seiten des Filterbandes bewirkt oder unterstützt wird.

Diese Aufgabe wird erfindungsgemäß durch die Merkmale des Anspruchs 1 gelöst.

Das erfindungsgemäße Druckbandfilter weist einen um eine Drehachse drehbaren Filterbehälter auf, der über seinen Umfang gleichmäßig oder auch ungleichmäßig verteilt angeordnete Filterkammern aufweist, in die eine zu filtrierende Flüssigkeit oder allgemein ein zu filtrierendes Fluid eingeleitet wird. Nachfolgend wird nur noch von einer Flüssigkeit gesprochen werden, was die Möglichkeit des Filterns auch eines Gases oder allgemein eines Fluids einschließt. Am Umfang des Filterbehälters weisen die Filterkammern eine oder auch mehrere Öffnungen auf, durch die zu filtrierende Flüssigkeit aus den Filterkammern ausströmt. Die Öffnungen können auch dadurch gebildet sein, dass die Filterkammern am Umfang des Filterbehälters offen sind. Ein Filterband ist um einen Teilumfang des Filterbehälters herum geführt und überdeckt die Öffnungen der Filterkammern, soweit sich diese in dem Teilumfang des Filterbehälters befinden, um den das Filterband herum geführt ist. Am Umfang aus den Filterkammern, die am Umfang von dem Filterband überdeckt sind, ausströmende Flüssigkeit durchströmt das Filterband und wird dabei gefiltert. Durch eine Zuführung der Flüssigkeit in die Filterkammern unter Druck oder durch eine Beaufschlagung der Filterkammern mit beispielsweise einem Druckgas lässt sich eine Druckdifferenz zwischen einer den Filterkammern zugewandten Innenseite und einer den Filterkammern abgewandten Außenseite des Filterbandes erzeugen und die Durchströmung des Filterbandes bewirken oder unterstützen. Denkbar ist auch eine Absenkung eines Drucks außerhalb der Filterkammern, um eine Druckdifferenz zwischen den beiden Seiten des Filterbandes zu erzeugen. Eine Druckdifferenz zwischen beiden Seiten des Filterbandes ist nicht zwingend für die Erfindung, das erfindungsgemäße Druckbandfilter kann auch drucklos als Bandfilter betrieben werden, wobei die zu filtrierende Flüssigkeit beispielsweise durch Schwerkraft durch das Filterband strömt.

Es ist vorgesehen, das Druckbandfilter so aufzustellen, dass die Drehachse des Filterbehälters horizontal oder jedenfalls in etwa horizontal verläuft und das Filterband unten um den Filterbehälter herum geführt ist derart, dass Flüssigkeit aus den Filterkammern durch Schwerkraft nach unten am Umfang des Filterbehälters ausströmt und dabei das Filterband durchströmt. Unterstützt wird die Ausströmung aus den Filterkammern und die Durchströmung des Filterbandes durch den erhöhten Druck in den Filterkammern.

Die Zuführung der zu filtrierenden Flüssigkeit erfolgt vorzugsweise bei stillstehendem, das heißt nicht drehendem Filterbehälter, durch eine Stirnwand des Filterbehälters. Vorzugsweise werden nicht alle Filterkammern gleichzeitig benutzt, sondern es wird nur eine oder eventuell auch mehrere, jedoch vorzugsweise nicht alle Filterkammern gleichzeitig sondern nacheinander zum Filtern benutzt.

Um einen Filterkuchen, der aus aus der Flüssigkeit gefilterten Feststoffen besteht, auf der den Filterkammern zugewandten Innenseite des Filterbandes aus dem Druckbandfilter zu entfernen, wird das Filterband mit dem Filterkuchen in der Umfangsrichtung des Filterbehälters und an einer Ausleitstelle vom Filterbehälter weg gefördert, wobei der Filterbehälter mit dem um seinen Umfang umlaufenden Filterband mitdreht. Der Filterbehälter wird vorzugsweise so weit gedreht, dass eine nächste Filterkammer zum Filtern zum Einsatz kommt.

In bevorzugter Ausgestaltung der Erfindung weist das Druckbandfilter eine Trocknungsgaszuführung in die Filterkammern auf. Das Trocknungsgas wird durch die gleiche oder eine andere Stirnwand des Filterbehälters wie die zu filtrierende Flüssigkeit in die Filterkammern geleitet. Das Trocknungsgas, beispielsweise Luft, strömt durch das Filterband aus und trocknet dabei sowohl den Filterkuchen als auch das Filterband. Das Trocknungsgas wird in eine oder mehrere Filterkammern geleitet, die zuvor zum Filtern verwendet worden sind und die am Umfang des Filterbehälters von dem Filterband überdeckt sind. Auch das Trocknungsgas wird vorzugsweise bei Stillstand des Filterbehälters und des Filterbandes zugeführt.

Die zu filtrierende Flüssigkeit und das Trocknungsgas werden vorzugsweise einander in der Umfangsrichtung des Filterbehälters folgenden Filterkammern zugeführt, wobei eine Filterkammer, der das Trocknungsgas zugeführt wird, in einer Drehrichtung des Filterbehälters hinter einer Filterkammer angeordnet ist, der die Flüssigkeit zugeführt wird. Vorzugsweise jedoch nicht zwingend werden die Flüssigkeit und das Trocknungsgas in der Umfangsrichtung des Filterbehälters aufeinander folgenden beziehungsweise benachbarten Filterkammern zugeführt.

Zum Drehen des Filterbehälters sind die Fluid- beziehungsweise Flüssigkeitszuführung und die Trocknungsgaszuführung vom Filterbehälter beziehungsweise von der oder den Stirnwand/Stirnwänden des Filterbehälters lösbar. Insbesondere sind die Fluid- beziehungsweise Flüssigkeitszuführung und die Trocknungsgaszuführung parallel zur Drehachse des Filterbehälters lösbar.

Der Filterbehälter weist bei einer Ausgestaltung des erfindungsgemäßen Druckbandfilters zwei gemeinsam um die Drehachse drehbare Stirnwände und Trennwände, die sich zwischen den beiden Stirnwänden von einer bis zu einer anderen der beiden Stirnwände erstrecken, auf. Die Trennwände, die insbesondere in Axialebenen zur Drehachse des Filterbehälters angeordnet sind, unterteilen einen Zwischenraum zwischen den beiden Stirnwänden in die Filterkammern. Die beiden Stirnwände sind insbesondere kreisförmig, allerdings können Sie auch eine andere Form aufweisen, beispielsweise mehreckig sein. Des Weiteren sind die beiden Stirnwände insbesondere koaxial zur Drehachse angeordnet und/oder in Radialebenen zur Drehachse angeordnet.

Sämtliche in der Beschreibung genannten und/oder der Zeichnung dargestellten Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:

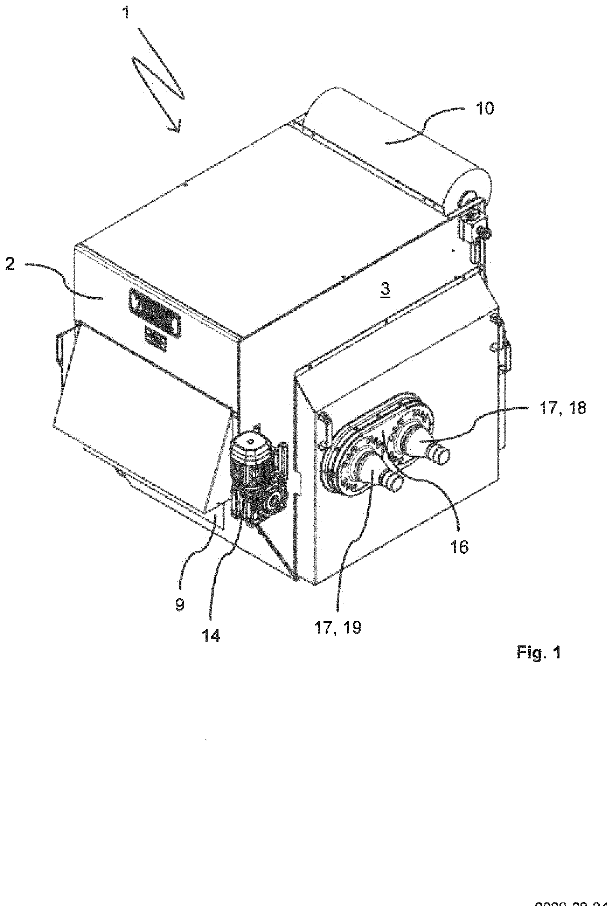

- Figur 1: eine perspektivische Darstellung eines Druckbandfilters gemäß der Erfindung;

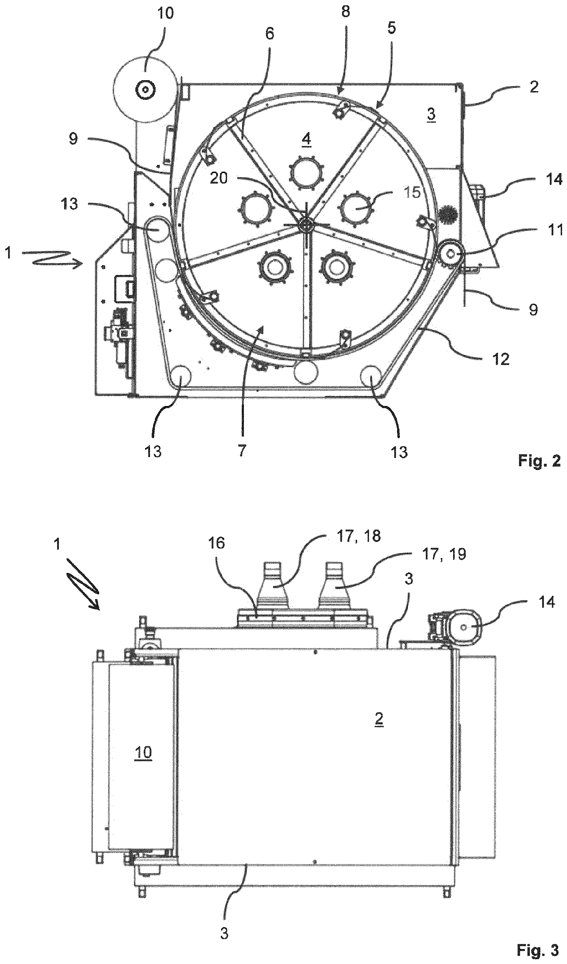

- Figur 2: einen Schnitt in einer Längsmittelebene des Druckbandfilters aus Figur 1; und
- Figur 3: das Druckbandfilter aus Figuren 1 und 2 von oben.

Die Zeichnung ist eine vereinfachte und teilweise schematisierte Darstellung.

Das in der Zeichnung dargestellte, erfindungsgemäße Druckbandfilter 1 weist ein kastenförmiges Filtergehäuse 2 auf, dessen unterer Bereich eine Auffangwanne für gefilterte Flüssigkeit (Filtrat) bildet. An Innenseiten von Seitenwänden 3 des Filtergehäuses 2 sind Kreisscheiben als Stirnwände 4 eines Filterbehälters 5 um eine gemeinsame Drehachse 20 drehbar gelagert. In einer vorgesehenen Gebrauchslage des Druckbandfilters 1 ist die Drehachse 20 horizontal. Die Stirnwände 4 des Filterbehälters 5 sind koaxial zu der Drehachse 20, in Radialebenen der Drehachse 20 und mit axialem Abstand voneinander angeordnet.

Zwischen den beiden Stirnwänden 4 sind Trennwände 6 in Axialebenen der Drehachse 20 angeordnet, die sich von einer Stirnwand 4 zu einer anderen Stirnwand 4 und von der Drehachse 20 bis zu einem Umfang der Stirnwände 4 erstrecken. Die Trennwände 6 verbinden die beiden Seitenwände 3 miteinander und unterteilen einen Zwischenraum zwischen den beiden Stirnwänden 4 in Filterkammern 7, die über einen Umfang des Filterbehälters 5 verteilt sind. Im Ausführungsbeispiel weist der Filterbehälter 5 fünf Trennwände 6 auf, die in der Umfangsrichtung des Filterbehälters 5 um jeweils 72° zueinander versetzt sind und die den Zwischenraum zwischen den beiden Stirnwänden 4 in fünf Filterkammern 7 unterteilen, die sich ebenfalls über jeweils 72° in der Umfangsrichtung des Filterbehälters 5 erstrecken. Nach außen, das heißt am Umfang des Filterbehälters 5 sind die Filterkammern 7 offen, wobei offene Seiten der Filterkammern 7 am Umfang des Filterbehälters 5 auch als Öffnungen 8 der Filterkammern 7 aufgefasst werden können.

Die beiden Stirnwände 4 und die Trennwände 6 bilden den Filterbehälter 5 mit den am Umfang offenen Filterkammern 7, der um die Drehachse 20 drehbar in dem Filtergehäuse 2 des erfindungsgemäßen Druckbandfilters 1 angeordnet ist.

Um nahezu eine untere Hälfte der kreisförmigen Stirnwände 4 beziehungsweise des Filterbehälters 5 ist ein Filterband 9 herumgeführt, das außen an den Stirnwänden 5 und den Trennwänden 6 anliegt. Das heißt, das Filterband 9 ist um einen Teilumfang des Filterbehälters 5 herum geführt, der sich - im Ausführungsbeispiel - um etwas weniger als 180° - in der Umfangsrichtung erstreckt. In dem Umfangsabschnitt des Filterbehälters 3, um den sich das Filterband 9 herum erstreckt, überdeckt das Filterband 9 die Öffnungen 8 der Filterkammern 7 beziehungsweise die außen am Umfang des Filterbehälters 5 offenen Filterkammern 7. In der vorgesehenen Gebrauchslage des erfindungsgemäßen Druckbandfilters 1 ist das Filterband 9 um eine untere Umfangshälfte des Filterbehälters 5 herum geführt.

Das Filterband 9 ist beispielsweise ein Vlies, das von einer Vorratsrolle 10 abgewickelt wird, die parallel zur Drehachse 20 des Filterbehälters 5 drehbar am Filtergehäuse 2 gelagert ist. Das von der Vorratsrolle 10 kommende Filterband 9 wird tangential an den Umfang des Filterbehälters 5 beziehungsweise seiner Stirnwände 4 heran geführt, anschließend um nahezu die untere Hälfte des Filterbehälters 5 herum geführt und auf einer gegenüberliegenden Seite um eine Antriebsrolle 11 herum vom Umfang des Filterbehälters 5 weg nach außen und aus dem Filtergehäuse 2 heraus geführt. Im Ausführungsbeispiel ist die Antriebsrolle 11 parallel zur Drehachse 20 des Filterbehälters 5 und an einem Umfang der Stirnwände 4 des Filterbehälters 5 anliegend und wälzend oder mit etwas Abstand von den Stirnwänden 4 drehbar am oder im Filtergehäuse 2 gelagert.

Auf einer der Drehachse 20 des Filterbehälters 5 abgewandten Außenseite wird das Filterband 9 von einem Gliederband als Stützband 12 abgestützt, das im gleichen Teilumfang wie das Filterband 9 unten um den Umfang des Filterbehälters 5 beziehungsweise seiner Stirnwände 4 herum geführt ist. Das Stützband 12 ist ein Endlosband, das um die Antriebsrolle 11 herum umgelenkt und mit Umlenkrollen 13 unter dem Filterbehälter 5 zurück geführt ist.

Ein Antrieb des Filterbandes 9 und des Stützbandes 12 erfolgt mittels eines Elektromotors/Getriebemotors 14, mit dem die Antriebsrolle 11 drehend antreibbar ist, um die das Stützband 12 umgelenkt und um die das Filterband 9 von dem Filterbehälter 5 weg nach außen und aus dem Filtergehäuse 2 heraus umgelenkt werden.

Bei einem Drehantrieb der Antriebsrolle 11 werden das Filterband 9 und das Stützband 12 um den Teilumfang des Filterbehälters 5 herum bewegt und über das Filterband 9 und das Stützband 12 der Filterbehälter 5 um seine Drehachse 20 drehend angetrieben.

Eine der beiden Stirnwände 4 des um die Drehachse 20 drehbaren Filterbehälters 5 weist Löcher als Durchlässe 15 in jede der Filterkammern 7 auf. Die Durchlässe 15 weisen gleiche Abstände von der Drehachse 20 des Filterbehälters 5 und gleiche Abstände in der Umfangsrichtung voneinander auf.

Eine Seitenwand 3 des Filtergehäuses 2 auf einer Seite des Druckbandfilters 1, auf der sich die Stirnwand 4 des Filterbehälters 5 mit den Durchlässen 15 befindet, weist einen plattenförmigen Halter 16 mit zwei Anschlussstutzen 17 auf, die parallel zur Drehachse 20 des Filterbehälters 5 angeordnet sind und den gleichen Abstand voneinander aufweisen wie die Durchlässe 15 in der Stirnwand 4 des Filterbehälters 5. Der Halter 16 mit den Anschlussstutzen 17 ist beispielsweise pneumatisch, elektromechanisch oder hydraulisch parallel zur Drehachse 20 des Filterbehälters 5 beweglich derart, dass die beiden Anschlussstutzen 17 in dichtende Anlage an der Stirnwand 4 des Filterbehälters 5 bringbar sind.

Zum Filtern einer Flüssigkeit oder allgemein eines Fluids wird der Filterbehälter 5 durch Antrieb des Filterbandes 9 und des Stützbandes 12 mit dem Elektromotor 14 so gedreht, dass zwei der Durchlässe 15 in der Stirnwand 4 des Filterbehälters 5 mit den beiden Anschlussstutzen 17 am Filtergehäuse 2 fluchten. Die Anschlussstutzen 17 werden in dichtende Anlage an die Stirnwand 4 verbracht derart, dass die beiden Anschlussstutzen 17 mit zwei der Filterkammern 7 des Filterbehälters 5 kommunizieren. Diese beiden Filterkammern 7 befinden sich in dem Teilumfang des Filterbehälters 5, um den das Filterband 9 herum geführt ist derart, dass das Filterband 9 die Öffnungen 8 am Umfang dieser beiden Filterkammern 9 beziehungsweise die offenen Außenseiten dieser beiden Filterkammern 9 überdeckt derart, dass Flüssigkeit oder allgemein ein Fluid, das durch die Öffnungen 8 beziehungsweise nach außen aus den Filterkammern 9 austritt, das Filterband 9 durchströmt.

Durch einen der beiden Anschlussstutzen 17, der der Vorratsrolle 10, von der das Filterband 9 dem Umfang des Filterbehälters 5 zugeführt wird, näher ist, wird die zu filtrierende Flüssigkeit in eine der beiden Filterkammern 7 geleitet. Dieser Anschlussstutzen 17 bildet eine Flüssigkeitszuführung oder allgemein eine Fluidzuführung 18 in eine der Filterkammern 7 des Filterbehälters 5 des erfindungsgemäßen Druckbandfilters 1. Durch Schwerkraft durchströmt die Flüssigkeit aus der Filterkammer 7 das Filterband 9 am Umfang des Filterbehälters 5 und wird dabei gefiltert. Durch eine Zufuhr der Flüssigkeit in die Filterkammer 7 unter Druck wird die Durchströmung des Filterbandes 9 beschleunigt und unterstützt. Die Flüssigkeit in der Filterkammer 7 kann beispielsweise auch durch Druckluft oder allgemein durch ein Druckgas unter Druck gesetzt werden. Aus der Flüssigkeit ausgefilterte Feststoffe lagern sich an einer der Filterkammer 7 zugewandten Innenseite des Filterbandes 9 als eine Art Belag ab, der als Filterkuchen bezeichnet wird.

Durch den anderen Anschlussstutzen 17, der der Antriebsrolle 11 näher ist, um die das Filterband 9 nach außen vom Filterbehälter 15 weg und aus dem Filtergehäuse 2 heraus umgelenkt wird, wird Druckluft oder ein anderes Trocknungsgas in die mit diesem Anschlussstutzen 17 kommunizierende Filterkammern7 geblasen, die durch den Filterkuchen auf der Innenseite des Filterbandes 9 und durch das Filterband 9 nach außen strömt und dabei das Filterband 9 und den Filterkuchen trocknet. Dieser Anschlussstutzen 17 bildet eine Trocknungsgaszuführung 19.

Steigt ein Druck in der Filterkammer 7, die mit der Fluidzuführung 18 kommuniziert, aufgrund eines mit zunehmender Dicke des Filterkuchens auf der Innenseite des Filterbandes 9 steigenden Durchströmungswiderstandes über einen - vorzugsweise einstellbaren - Wert, werden die Anschlussstutzen 17 axial zur Drehachse 20 des Filterbehälters 5 von dessen Stirnwand 4 abgehoben und der Filterbehälter 5 um eine Filterkammer 7 weiter gedreht, bis der Durchlass 15, der mit der Fluidzuführung 18 kommuniziert hat, mit der Trocknunggaszuführung 19 fluchtet. Das Abheben der Anschlussstutzen 17 von der Stirnwand 4 des Filterbehälters 5 kann auch als Lösen der Anschlussstutzen 17 beziehungsweise der Fluidzuführung 18 und der Trocknungsgaszuführung 19 vom Filterbehälter 5 beziehungsweise von der Stirnwand 4 des Filterbehälters 5 aufgefasst werden. Damit fluchtet der Durchlass 15 einer nächsten Filterkammer 7 mit der Fluidzuführung 18. Die die Fluidzuführung 18 und die Trocknungsgaszuführung 19 bildenden Anschlussstutzen 7 werden wieder in dichtende Anlage an die Stirnwand 4 des Filterbehälters 5 verbracht und es kann erneut Flüssigkeit in einer Filterkammer 7 gefiltert und das Filterband 9 und der Filterkuchen an einer nächsten Filterkammer 7 mit Druckluft oder dem anderen Trocknungsgas getrocknet werden.

Möglich ist beispielsweise auch, den Filterbehälter 5 in vorgegebenen Zeitabständen oder manuell gesteuert um jeweils eine Filterkammer 7 weiter zu drehen.

## Patentansprüche

1. Druckbandfilter, mit einem um eine Drehachse (20) drehbaren Filterbehälter (5), der über einen Umfang des Filterbehälters (5) verteilt angeordnete Filterkammern (7) aufweist, die Öffnungen (8) an einem Umfang des Filterbehälters (5) aufweisen, mit einem Filterband (9), das um einen Teilumfang des Filterbehälters (5) herum geführt ist und die Öffnungen (8) der Filterkammern (7) am Umfang des Filterbehälters (5) überdeckt derart, dass an dem von dem Filterband (9) überdeckten Teilumfang des Filterbehälters (5) aus den Filterkammern (7) ausströmendes Fluid das Filterband (9) durchströmt, und mit einer Fluidzuführung (18) durch eine Stirnwand (4) des Filterbehälters (5) in jede Filterkammer (7).

2. Druckbandfilter nach Anspruch 1, **dadurch gekennzeichnet, dass** das Druckbandfilter (1) eine Trocknungsgaszuführung (19) durch eine Stirnwand (4) des Filterbehälters (5) in jede Filterkammer (7) aufweist.

3. Druckbandfilter nach Anspruch 2, **dadurch gekennzeichnet, dass** die Trocknungsgaszuführung (19) an einer der Fluidzuführung (18) folgenden Filterkammer (7) angeordnet ist.

4. Druckbandfilter nach einem oder mehreren der Ansprüche 1 bis 3, **dadurch gekennzeichnet, dass** die Fluidzuführung (18) und die Trocknungsgaszuführung (19) zum Drehen des Filterbehälters (5) von dem Filterbehälter (5) lösbar sind.

5. Druckbandfilter nach Anspruch 4, **dadurch gekennzeichnet, dass** die Fluidzuführung (18) und die Trocknungsgaszuführung (19) parallel zur Drehachse (20) des Filterbehälters (5) von dem Filterbehälter (5) lösbar sind.

6. Druckbandfilter nach einem oder mehreren der vorhergehenden Ansprüche, **dadurch gekennzeichnet, dass** der Filterbehälter (5) zwei gemeinsam um die Drehachse (20) drehbare Stirnwände (4) in einem Abstand voneinander und sich von einer zu einer anderen der beiden Stirnwände (4) erstreckende Trennwände (6) aufweist, die einen Zwischenraum zwischen den Stirnwänden (4) des Filterbehälters (5) in die Filterkammern (7) unterteilen, aufweist.

## Claims

1. Pressure belt filter having a filter container (5) which is rotatable about an axis of rotation (20) and has filter chambers (7) which are arranged distributed over a periphery of the filter container (5), which filter chambers have openings (8) at a periphery of the filter container (5), having a filter belt (9) which is guided around part of the periphery of the filter container (5) and covers the openings (8) of the filter chambers (7) at the periphery of the filter container (5) in such a way that, on the part of the periphery of the filter container (5) covered by the filter belt (9), fluid flowing out of the filter chambers (7) flows through the filter belt (9), and having a fluid feed (18) through an end wall (4) of the filter container (5) into each filter chamber (7).

2. Pressure belt filter according to Claim 1, **characterized in that** the pressure belt filter (1) has a drying-gas feed (19) through an end wall (4) of the filter container (5) into each filter chamber (7).

3. Pressure belt filter according to Claim 2, **characterized in that** the drying-gas feed (19) is arranged at a filter chamber (7) which follows the fluid feed (18).

4. Pressure belt filter according to one or more of Claims 1 to 3, **characterized in that**, for rotating the filter container (5), the fluid feed (18) and the drying-gas feed (19) are able to be released from the filter container (5).

5. Pressure belt filter according to Claim 4, **characterized in that** the fluid feed (18) and the drying-gas feed (19) are able to be released from the filter container (5) parallel to the axis of rotation (20) of the filter container (5).

6. Pressure belt filter according to one or more of the preceding claims, **characterized in that** the filter container (5) has two end walls (4) at a distance from one another, which are rotatable together about the axis of rotation (20), and has dividing walls (6), which extend from one to another one of the two end walls (4) and subdivide an intermediate space between the end walls (4) of the filter container (5) into the filter chambers (7).

## Revendications

1. Filtre à bande de pression, avec un récipient de filtre (5) pouvant tourner autour d'un axe de rotation (20), qui présente des chambres de filtre (7) réparties sur une périphérie du récipient de filtre (5), qui présentent des ouvertures (8) sur une périphérie du récipient de filtre (5), avec une bande de filtre (9) qui est guidée autour d'une périphérie partielle du récipient de filtre (5) et qui recouvre les ouvertures (8) des chambres de filtre (7) sur la périphérie du récipient de filtre (5) de telle sorte, que sur la périphérie partielle du récipient de filtre (5) recouverte par la bande de filtre (9), le fluide s'écoulant des chambres de filtre (7) traverse la bande de filtre (9), et avec une amenée de fluide (18) à travers une paroi frontale (4) du récipient de filtre (5) dans chaque chambre de filtre (7).

2. Filtre à bande de pression selon la revendication 1, **caractérisé en ce que** le filtre à bande de pression (1) présente une amenée de gaz de séchage (19) à travers une paroi d'extrémité (4) du récipient de filtre (5) dans chaque chambre de filtre (7).

3. Filtre à bande de pression selon la revendication 2, **caractérisé en ce que** l'amenée de gaz de séchage (19) est agencée sur une chambre de filtre (7) suivant l'amenée de fluide (18).

4. Filtre à bande de pression selon une ou plusieurs des revendications 1 à 3, **caractérisé en ce que** l'amenée de fluide (18) et l'amenée de gaz de séchage (19) peuvent être détachées du récipient de filtre (5) pour faire tourner le récipient de filtre (5).

5. Filtre à bande de pression selon la revendication 4, **caractérisé en ce que** l'amenée de fluide (18) et l'amenée de gaz de séchage (19) peuvent être détachées du récipient de filtre (5) parallèlement à l'axe de rotation (20) du récipient de filtre (5).

6. Filtre à bande de pression selon une ou plusieurs des revendications précédentes, **caractérisé en ce que** le récipient de filtre (5) présente deux parois frontales (4) pouvant tourner ensemble autour de l'axe de rotation (20) à une distance l'une de l'autre et des parois de séparation (6) s'étendant de l'une à l'autre des deux parois frontales (4), qui divisent un espace intermédiaire entre les parois frontales (4) du récipient de filtre (5) en les chambres de filtre (7).
